# EUROPÄISCHE PATENTSCHRIFT

(11) **EP 0 897 841 B1**
(45) Veröffentlichungstag und Bekanntmachung des Hinweises auf die Patenterteilung: **06.10.2004**
(21) Anmeldenummer: 98114356.3
(22) Anmeldetag: 30.07.1998
(51) Int. Cl.: B60R 25/00, E05B 49/00

(54) **Verfahren zur Vermeidung des Missbrauchs von in einem Fahrzeug eingeschlossenen Transpondern**
Method of preventing unauthorised use of a transponder locked in a motor vehicle
Procédé pour éviter l'utilisation non-autorisée d'un transpondeur enfermé dans un véhicule

(30) Priorität: 16.08.1997 DE 19735658
(43) Veröffentlichungstag der Anmeldung: 24.02.1999
(73) Patentinhaber: ROBERT BOSCH GMBH, 70442 Stuttgart (DE)
(72) Erfinder: Weigl, Andreas, 76351 Linkenheim-Hochstetten (DE); Hauler, Peter, 76275 Ettlingen (DE); Weiss, Karl-Ernst, 76275 Ettlingen (DE); Feuchter, Uwe, 70563 Stuttgart (DE); Schroff, Clemens, 76698 Ubstadt-Weiher (DE); Klaiber, Tobias, 75428 Illingen-Schuetzingen (DE); Riehemann, Thomas, 77830 Buehlertal (DE)

(56) Entgegenhaltungen:
- EP-A- 0 667 597
- EP-B- 0 158 354
- EP-B- 0 523 602
- US-A- 4 670 746
- US-A- 4 763 121

## Beschreibung

### Stand der Technik

Die Erfindung geht aus von einem Verfahren nach der Gattung des Hauptanspruchs. Ein Verfahren dieser Art ist aus der DE 41 23 654 A1 bekannt. Um zu vermeiden, daß ein Unberechtigter einen in einem Fahrzeug vergessenen Transponder zur Inbetriebnahme des Fahrzeuges verwenden kann, werden Maßnahmen vorgesehen, auf Grund derer eine Verriegelung des Fahrzeuges nur erfolgt, wenn sich der Transponder sicher außerhalb des Fahrzeuges befindet. Die Erkennung der Transponderposition innerhalb oder außerhalb des Fahrzeuges erfolgt mit zwei Antennen, von denen eine auf den Innen-, die andere auf den Außenraum gerichtet ist. Indem eine Entriegelung nur möglich ist, wenn das Transpondersignal über die in den Außenraum gerichtete Antenne eingeht, ist sichergestellt, daß das Fahrzeug nicht einfach in Betrieb genommen werden kann, wenn der Transponder im Fahrzeug eingeschlossen wurde. Eine unberechtigte Inbetriebnahme des Fahrzeuges ist jedoch möglich, wenn ein im Fahrzeug zurückgelassener Transponder durch Einbruch in das Fahrzeug in die Hände eines Unberechtigten gelangt und von diesem verwendet wird. Auch sind Fahrzeugen in der Regel mehrere berechtigte Transponder zugeordnet, weshalb es auch wenn sichergestellt wurde, daß der zuletzt benutzte Transponder sich außerhalb des Fahrzeuges befindet, möglich ist, daß sich im Fahrzeug ein weiterer berechtigter Transponder befindet, der anschließend im Falle eines Einbruchs die Inbetriebnahme des Fahrzeugs ermöglichen würde.

Es ist Aufgabe der Erfindung, ein Verfahren zum Betrieb eines berührungslos arbeitenden Fahrzeugzugangssystems anzugeben, welches sicherstellt, daß eine unberechtigte Benutzung eines Fahrzeuges auch dann nicht möglich ist, wenn ein berechtigter Transponder im Fahrzeug zurückgelassen wurde.

Die Aufgabe wird gelöst durch ein Verfahren mit den Merkmalen des Hauptanspruchs. Zur Sicherung für im Fahrzeug zurückgelassene Transponder werden diese beim Verriegeln des Fahrzeuges registriert. Nur wenn sich die registrierten Transponder bei der folgenden ordnungsgemäßen Fahrzeugentriegelung immer noch im Fahrzeug befinden, ist eine weitere Nutzung dieser Transponder möglich. Das Verfahren arbeitet unabhängig von der Anzahl der einem Fahrzeug zugeordneten Transponder und erlaubt ein gezieltes Sperren von unberechtigt benutzten Transpondern. In vorteilhafter Weiterbildung des erfindungsgemäßen Verfahrens ist eine Überwachung auf gewaltsames Eindringen in den Fahrzeuginnenraum vorgesehen. Wird ein nichtregulärer Zugangsversuch erkannt, werden alle im Fahrzeug befindlichen und registrierten Transponder gesperrt.

Unter Bezugnahme auf die Zeichnung wird ein Ausführungsbeispiel der Erfindung nachfolgend näher erläutert.

### Zeichnung

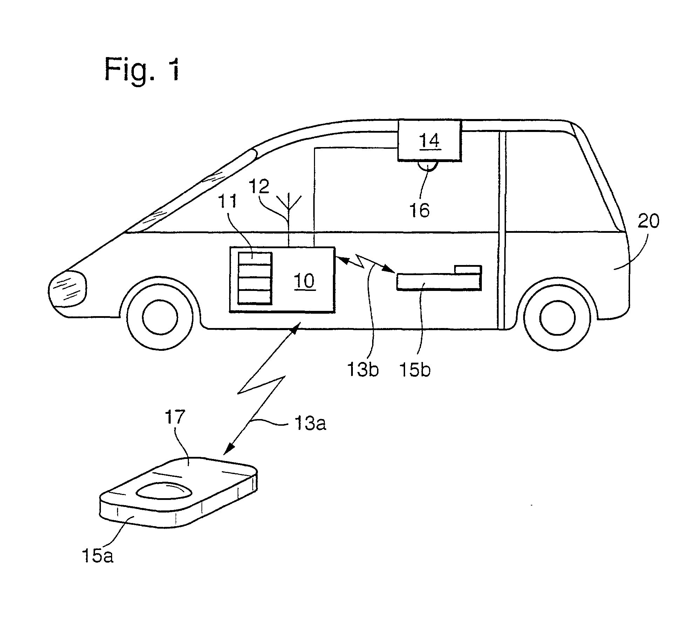

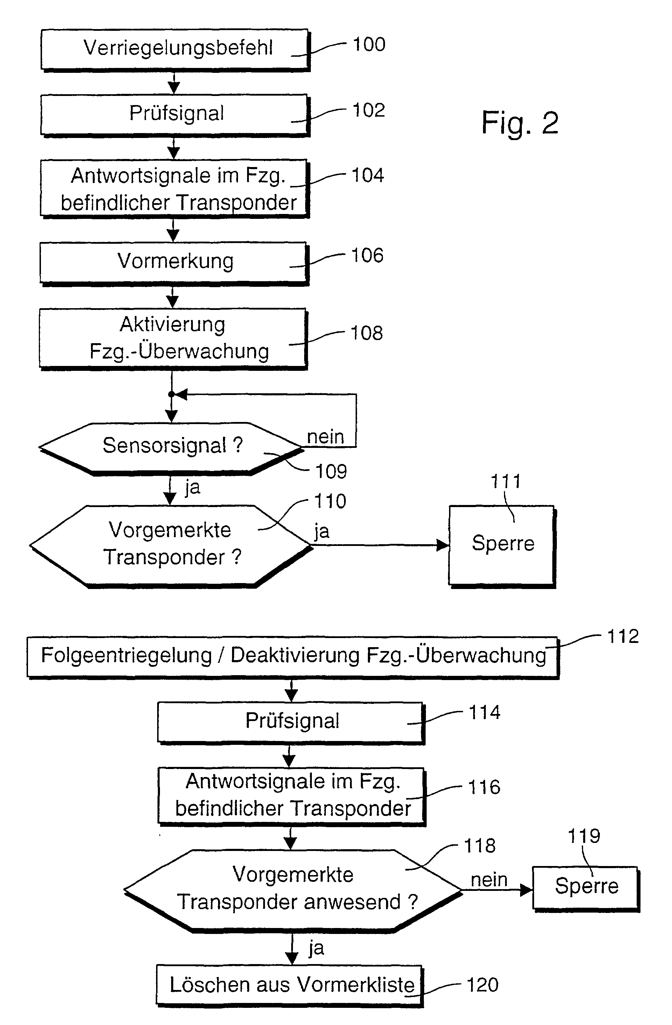

Es zeigen Figur 1 ein mit einem schlüssellos arbeitenden Zugangssystem ausgestattetes Fahrzeug, Figur 2 ein Flußdiagramm zur Veranschaulichung der Arbeitsweise des vorgestellten Verfahrens.

### Beschreibung

Figur 1 zeigt in vereinfachter Wiedergabe ein mit einem Zugangskontrollsystem ausgerüstetes Fahrzeug 20. Das Zugangskontrollsystem setzt sich zusammen aus einer im Fahrzeug angeordnete Steuerung für Zugangs- und Fahrberechtigung 10, im folgenden kurz Steuerung genannt, welche die Berechtigung eines Fahrzeugbenutzers zur Benutzung des Fahrzeuges prüft, sowie Transpondern 15 welche über Signalstrecken 13a, 13b mit der Steuerung 10 in Signalverbindung stehen. Einem Fahrzeug sind in der Regel mehrere Transponder 15a, 15b zugeordnet, von denen jeder zur Inbetriebnahme des Fahrzeugs berechtigt. Zum Empfang bzw. zur Abgabe von Signalen von/an die Transponder 15a, 15b verfügt die Steuerung 10 über eine oder mehrere Antennen 12, mittels derer sowohl Signalstrekken 13a im Außenraum des Fahrzeuges, als auch Signalstrecken 13b im Innenraum des Fahrzeuges realisierbar sind. Die Steuerung 10 verfügt ferner über einen Speicher 11, in den Informationen über die Transponder 15a, 15b ablegbar sind. Mit der Steuerung 10 verbunden ist weiterhin eine Fahrzeugüberwachung 14, welche zum Erkennen eines unberechtigten Eindringens in den Fahrzeuginnenraum dient und zweckmäßig Mittel 16 zur Erkennung von Glasbruch und/oder Bewegungen innerhalb des verriegelten Fahrzeuginnenraums aufweist.

Anhand des Flußdiagramms in Figur 2 wird nachfolgend der Betrieb des Zugangskontrollsystems 10 bis 17 erläutert. Es wird angenommen, daß sich ein rechtmäßiger Benutzer im Fahrzeug 20 befinde und es nach Beendigung des Betriebes verlassen will. Während oder unmittelbar nach dem Verlassen des Fahrzeuges kommt es zwischen dem vom Benutzer mitgeführten Transponder 15 und der Steuerung 10 automatisch oder auf Veranlassung durch den Benutzer, etwa durch Betätigen eines Türgriffs, über den damit verbundenen Schalter zu einem Signalaustausch. Bei auf das Fahrzeug zugelassenen Transpondern 15 erzeugt die Zugangssteuerung 10 einen Verriegelungsbefehl, Schritt 100. Die Steuerung 10 setzt daraufhin über die Antenne 12 ein Prüfsignal in den Innenraum des Fahrzeuges 20 ab, welches eventuell im Fahrzeug befindliche Transponder 15b zur Abgabe eines Antwortsignales veranlaßt, Schritt 102. Befinden sich Transponder 15b im Fahrzeuginnenraum, antworten sie durch Rücksendung eines den jeweiligen Transponder eindeutig charakterisierenden Antwortsignales, Schritt 104. Aus den empfangenen Antwortsignalen bestimmt die Steuerung 10 die im Innenraum des Fahrzeuges 20 zurückgelassenen Transponder 15b und vermerkt sie jeweils durch eine entsprechende Eintragung im Speicher 11, Schritt 106.

Darauf wird die Fahrzeugüberwachung 14 aktiv geschaltet, Schritt 108. Bis zu ihrer Deaktivierung überwacht sie den Fahrzeuginnenraum auf Einbruchsversuche, Schritt 109.
Spricht einer der Sensoren 16 der Fahrzeugüberwachung 14 an und signalisiert einen Einbruchsversuch, prüft die Steuerung 10, ob im Speicher 11 Transponder 15b als im Fahrzeug anwesend vermerkt sind, Schritt 111. Trifft das zu, sperrt sie alle vermerkten Transponder 15b, Schritt 111. Mit dem im Fahrzeug verbliebenen Transponder 15b ist danach die Herstellung eines regulären Zugangs zu dem Fahrzeug und dessen Inbetriebnahme nicht mehr möglich.

Durch einen beim nächsten Fahrzeugzugang mit einem gültigen Transponder 15 herbeigeführten Entriegelungsbefehl wird die Fahrzeugüberwachung 14 deaktiviert, Schritt 112. Nach Erhalt des Entriegelungsbefehles prüft die Steuerung 10, ob im Speicher 11 Transponder 15b als im Fahrzeug anwesend vermerkt sind, Schritt 114. Bejahendenfalls setzt sie abermals ein Prüfsignal ab, durch das im Fahrzeug 20 befindliche Transponder 15b zur Abgabe eines Antwortsignales veranlaßt werden, Schritt 114. Im Fahrzeug 20 befindliche Transponder 15b antworten entsprechend durch Rücksendung eines eindeutig charakterisierenden Antwortsignales an die Steuerung 10, Schritt 116. Jene ermittelt aus den Antwortsignalen die im Fahrzeug befindlichen Transponder 15b und vergleicht diese mit den im Speicher 11 vorgemerkten Transpondern 15. Speichervermerke zu Transpondern 15b, die bei der erneuten Prüfung wiederum als anwesend erkannt wurden, löscht sie sodann, Schritt 120. Transponder 15, zu denen im Speicher 11 ein Vermerk besteht, die auf das Prüfungsignal im Schritt 114 hin aber nicht als im Fahrzeug anwesend erkannt wurden, werden gesperrt, Schritt 119. In einfacher Weise kann die Sperre durch einen weiteren entsprechenden Eintrag im Speicher 11 erfolgen.

Das vorgeschriebene Konzept bietet unter Beibehaltung seiner zugrundeliegenden Idee einen breiten Ausgestaltungsspielraum. Beispielsweise gilt das für die Art der verwendeten Signale oder ihre Erzeugung. So können für die Signalstrekken 13a, 13b funk-, ultraschall- oder optische Signale in codierter oder nichtcodierter Form eingesetzt werden. Im Zusammenhang mit der Sperre von Transpondern 15 können weitere Maßnahmen vorgesehen sein, etwa die selbständige Absetzung eines Alarmsignales. Ferner kann die Ausführung eines Ver-/Entriegelungsbefehles bereits während oder erst im Anschluß an die Prüfung auf im Fahrzeuginnenraum vorhandene Transponder 15 erfolgen. Das vorgeschlagene Konzept eignet sich weiterhin nicht nur für Transponder, sondern allgemein für mit einem Fahrzeugsteuergerät kommunizierende Fernbedienungen.

## Patentansprüche

1. Verfahren zur Vermeidung des Mißbrauchs von in einem Fahrzeug eingeschlossenen Transpondern (15), welche Teil eines schlüssellos arbeitenden Fahrzeugzugangssystems sind und mit einer im Fahrzeug (20) befindlichen Steuerung für Zugangsund Fahrberechtigung (10) zusammenwirken, wobei die Steuerung (10) auf einen Verriegelungsbefehl hin ein Prüfsignal abgibt, mittels dessen festgestellt wird, ob sich nach dem Verriegeln noch Transponder (15b) im Fahrzeuginnenraum befinden, **dadurch gekennzeichnet, daß** als nach dem Verriegeln im Fahrzeuginnenraum befindlich erkannte Transponder (15b) in einem der Steuerung (10) zugeordneten Speicher (11) registriert werden und daß der Steuerung (10) eine Fahrzeugüberwachung (14) zugeordnet ist und die Steuerung (10) alle im Speicher (11) vorgemerkten Transponder (15) sperrt, wenn die Fahrzeugüberwachung (14) das Erwirken eines nichtregulären Zuganges zu dem Fahrzeug (20) erkennt.

2. Verfahren nach Anspruch 1, **dadurch gekennzeichnet, daß** die Steuerung (10) auf einen Entriegelungsbefehl hin ein Prüfsignal abgibt, um festzustellen, ob sich Transponder (15b) im Fahrzeug befinden, als anwesend erkannte Transponder (15b) mit den im Speicher (11) registrierten vergleicht, und wiedererkannte Registrierungen löscht.

3. Verfahren nach Anspruch 2, **dadurch gekennzeichnet, daß** die Steuerung (10) die Inbetriebnahme des Fahrzeuges (20) verhindert oder den Betrieb beschränkt, wenn ein im Speicher (11) vorgemerkter Transponder (15) im Anschluß an den nächsten Entriegelungsbefehl nicht wiedererkannt wird.

4. Verfahren nach Anspruch 2, **dadurch gekennzeichnet, daß** die Steuerung (10) ein Prüfsignal nur abgibt, wenn im Speicher (11) wenigstens ein Transponder (15b) vorgemerkt ist.

5. Anordnung zur Durchführung des Verfahrens nach Anspruchs 1, mit
- einem von einem Benutzer mitführbaren Transponder (15) zur elektronischen Identifizierung,
- einer in einem Fahrzeug (20) zur Prüfung der Zugangs- und Fahrberechtigung eines Benutzers angeordneten Steuerung (10), welche über Mittel zur Abgabe von Prüfsignalen zur Feststellung von im Fahrzeuginnenraum befindlichen Transpondern (15b) sowie einen Speicher (11) zur Registrierung von als anwesend erkannten Transpondern (15b) verfügt und
- mit einer Fahrzeugüberwachung (14) zur Erkennung eines nichtregulären Zugangs zu den Fahrzeug (20), so daß durch die Steuerung (10) alle im Speicher (11) vorgemerkten Transponder (15) sperrbar sind, wenn die Fahrzeugüberwachung (14) das Erwirken eines nichtregulären Zugangs zu dem Fahrzeug (20) erkennt.

## Claims

1. Method for preventing the misuse of transponders (15) which are locked in a vehicle and which are part of a vehicle access system operating in a keyless fashion and which interact with a controller, located in the vehicle (20), for access and driving authorization (10), the controller (10) outputting, in response to a locking instruction, a test signal which is used to determine whether there are still transponders (15b) in the interior of the vehicle after the locking occurs, **characterized in that** transponders (15b) which are detected as being located in the interior of the vehicle after the locking occurs are registered in a memory (11) which is assigned to the controller (10), and **in that** a vehicle monitoring system (14) is assigned to the controller (10), and the controller (10) disables all the transponders (15) which are marked in the memory (11), when the vehicle monitoring system (14) detects that an illegitimate access to the vehicle (20) is brought about.

2. Method according to Claim 1, **characterized in that** the controller (10) outputs a test signal in response to an unlocking instruction, in order to determine whether transponders (15b) are located in the vehicle, compares transponders (15b) which are detected as being present with the transponders which are registered in the memory (11) and deletes registrations which are detected again.

3. Method according to Claim 2, **characterized in that** the controller (10) prevents the vehicle (20) being actuated, or restricts the operation, if a transponder (15) which is marked in the memory (11) is not recognized again after the next unlocking instruction.

4. Method according to Claim 2, **characterized in that** the controller (20) outputs a test signal if at least one transponder (15b) is marked in the memory (11).

5. Arrangement for carrying out the method according to Claim 1, having
- a transponder (15), which can be carried by a user, for electronic identification,
- a controller (10) which is arranged in a vehicle (20) for testing the access and driving authorization of the user and which has means of outputting test signals for determining transponders (15b) which are located in the interior of the vehicle, and a memory (11) for registering transponders (15b) which are recognized as being present, and
- having a vehicle monitoring system (14) for detecting an illegitimate access to the vehicle (20) so that all the transponders (15) which are marked in the memory (11) can be disabled by the controller (10) when the vehicle monitoring system (14) detects that an illegitimate access to the vehicle (20) is brought about.

## Revendications

1. Procédé pour éviter l'usage non autorisé de transpondeurs (15) renfermés dans un véhicule, lesquels font partie d'un système d'accès au véhicule à fonctionnement sans clé et agissent conjointement avec une commande (10) située dans le véhicule (20) et destinée à autoriser l'accès et la conduite, la commande (10) émettant lorsqu'elle reçoit un ordre de verrouillage un signal de vérification à l'aide duquel on détermine si des transpondeurs (15b) se trouvent encore à l'intérieur du véhicule après le verrouillage,
**caractérisé en ce que**
les transpondeurs (15b) reconnus comme présents à l'intérieur du véhicule après le verrouillage sont enregistrés dans une mémoire (11) associée à la commande (10) et
une surveillance du véhicule (14) est associée à la commande (10) et la commande (10) bloque tous les transpondeurs (15) inscrits dans la mémoire (11) lorsque la surveillance du véhicule (14) identifie qu'on a obtenu un accès non régulier au véhicule (20).

2. Procédé selon la revendication 1,
**caractérisé en ce que**
la commande (10) émet un signal de vérification lorsqu'elle reçoit un ordre de déverrouillage afin de déterminer s'il y a des transpondeurs (15b) dans le véhicule, elle compare les transpondeurs (15b) reconnus comme présents à ceux enregistrés dans la mémoire (11) et efface les enregistrements reconnus.

3. Procédé selon la revendication 2,
**caractérisé en ce que**
la commande (10) empêche la mise en marche du véhicule (20) ou en limite le fonctionnement lorsqu'un transpondeur (15) inscrit dans la mémoire (11) n'est pas reconnu en liaison avec l'ordre suivant de déverrouillage.

4. Procédé selon la revendication 2,
**caractérisé en ce que**
la commande (10) émet uniquement un signal de vérification si au moins un transpondeur (15b) est inscrit dans la mémoire (11).

5. Système pour exécuter le procédé selon la revendication 1, comportant
- un transpondeur (15) que l'usager peut emporter et qui sert à l'identification électronique,
- une commande (10), disposée dans le véhicule (20) et destinée à vérifier qu'un usager est autorisé à l'accès et à la conduite, qui dispose de moyens pour émettre des signaux de vérification afin de déterminer si des transpondeurs (15b) se trouvent à l'intérieur du véhicule ainsi qu'une mémoire (11) destinée à enregistrer des transpondeurs (15b) reconnus comme présents, et
- une surveillance du véhicule (14) destinée à identifier un accès non régulier au véhicule (20) de sorte que tous les transpondeurs (15) inscrits dans la mémoire (11) peuvent être bloqués par la commande (10) lorsque la surveillance du véhicule (14) identifie qu'on a obtenu un accès non régulier au véhicule (20).
